(19) Europäisches Patentamt
European Patent Office
Office européen des brevets

(11) EP 1 748 174 B1

(12) FASCICULE DE BREVET EUROPEEN

(45) Date de publication et mention de la délivrance du brevet:
**21.05.2008 Bulletin 2008/21**

(51) Int Cl.:
***F02D 41/14*** *(2006.01)* ***F02B 37/00*** *(2006.01)*

(21) Numéro de dépôt: **06300827.0**

(22) Date de dépôt: **25.07.2006**

(54) **Système et procédé d'estimation du débit d'alimentation en air frais d'un moteur de véhicule automobile équipé d'un turbocompresseur de suralimentation**

Verfahren und Vorrichtung zur Schätzung des Luftdurchsatzes eines Kraftfahrzeugmotors mit Abgasturbolader

Method and apparatus for estimating air flow quantity of a vehicle tubocharged engine

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **27.07.2005 FR 0508018**

(43) Date de publication de la demande:
**31.01.2007 Bulletin 2007/05**

(73) Titulaire: **RENAULT S.A.S.**
**92100 Boulogne Billancourt (FR)**

(72) Inventeurs:
- **Aouchiche, Kamal**
**93120, LA COURNEUVE (FR)**
- **Mauger, Patrick**
**95610, ERAGNY SUR OISE (FR)**

(56) Documents cités:
**WO-A-01/29386** **DE-A1- 10 124 595**
**US-A- 5 377 112** **US-B1- 6 298 718**

- **PATENT ABSTRACTS OF JAPAN vol. 2003, no. 12, 5 décembre 2003 (2003-12-05) & JP 2004 052772 A (ROBERT BOSCH GMBH), 19 février 2004 (2004-02-19)**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 748 174 B1

## Description

La présente invention porte sur un système et un procédé d'estimation du débit d'alimentation en air frais d'un moteur de véhicule automobile équipé d'un turbocompresseur de suralimentation.

La suralimentation en air d'un moteur permet d'augmenter les performances du moteur en admettant une masse d'air plus conséquente pour la combustion du carburant. Un tel système comprend généralement un ensemble turbocompresseur de suralimentation comprenant un compresseur et une turbine à géométrie variable. Le compresseur alimente le moteur en air à une pression supérieure à la pression atmosphérique et la turbine est traversée par les gaz d'échappement issus du moteur.

Un ensemble turbocompresseur comprend une turbine et un compresseur ayant pour but d'augmenter la quantité d'air admise dans les cylindres du moteur. La puissance fournie par les gaz d'échappement à la turbine peut être modulée en installant une soupape de décharge ou en prévoyant une turbine munie d'ailettes à orientation variable de façon à constituer un turbocompresseur à géométrie variable (TGV).

Le compresseur est monté sur un axe mécanique recevant également la turbine de sorte que le compresseur comprime l'air qui entre dans le répartiteur d'admission.

Un échangeur de chaleur peut être placé entre le compresseur et le répartiteur d'admission du moteur afin de refroidir l'air comprimé à la sortie des compresseurs.

Des actionneurs sont utilisés pour piloter l'ouverture et la fermeture des soupapes de décharge ou l'orientation des ailettes de la turbine de façon à modifier la géométrie de ladite turbine. Les signaux de commande de ces actionneurs sont fournis par l'unité de commande électronique.

Généralement, on utilise un débitmètre pour déterminer le débit d'alimentation en air frais d'un moteur suralimenté de véhicule automobile. Cependant, l'utilisation d'un débitmètre comprend plusieurs inconvénients, par exemple un encombrement et un coût excessifs, ainsi qu'une utilisation exclusive.

Le document WO 01/29386 (Robert BOSCH) concerne un procédé et un dispositif de détermination de la pression d'alimentation d'un turbocompresseur à partir d'une cartographie prédéterminée du compresseur. Le débit d'alimentation en air frais du moteur n'est pas déterminé. En outre, il n'est pas tenu compte de l'usure du dispositif avec le temps.

Le document FR 2 281 889 (Volkswagen) décrit un procédé et un dispositif de détermination de la température de l'air en sortie du compresseur d'un turbocompresseur, en d'autres termes en aval du turbocompresseur. On utilise, par exemple, un capteur de débit d'air ou débitmètre pour mesurer le débit d'alimentation en air frais du moteur.

Le document DE-10124595 décrit un système d'estimation en air frais d'un moteur en fonction de la vitesse de rotation du turbocompresseur.

Ainsi, le but de l'invention est proposer un procédé et un système pour déterminer le débit d'alimentation en air frais d'un moteur suralimenté de véhicule automobile, à moindre coût, d'encombrement réduit, et de montage aisé.

Aussi, selon un aspect de l'invention, il est proposé un système d'estimation du débit d'alimentation en air frais d'un moteur de véhicule automobile équipé d'un turbocompresseur de suralimentation comprenant un compresseur d'admission et une turbine d'échappement, et équipé d'une unité de commande électronique. Le système comprend un capteur de vitesse de rotation du turbocompresseur, une première cartographie mémorisée du débit d'alimentation en air frais du moteur en fonction de premiers paramètres de fonctionnement du moteur comprenant une fonction de la vitesse de rotation du turbocompresseur, et des moyens de mise à jour de ladite première cartographie du débit d'alimentation en air frais du moteur.

Un tel système n'utilise pas de débitmètre coûteux et difficile à disposer dans la ligne d'admission d'air du moteur. Les coûts de fabrication et de montage sont donc diminués ;

En outre, il n'est pas nécessaire de disposer un débitmètre dans la ligne d'admission d'air du moteur par perçage et colmatage, ce qui permet d'améliorer la sûreté de fonctionnement du véhicule.

Dans un mode de réalisation préféré, le système comprend un capteur de mesure de la température de l'air frais admis en amont du compresseur, une vanne d'alimentation disposée sur la conduite d'alimentation en air frais du moteur, située en aval du compresseur et en amont d'une conduite de recirculation des gaz d'échappement du moteur, un capteur de mesure de la pression en amont de ladite vanne d'alimentation, et un capteur de mesure de la pression atmosphérique. Lesdits premiers paramètres de fonctionnement du moteur comprennent un premier rapport de la vitesse de rotation du turbocompresseur et de la racine carrée de la température en amont du compresseur, et un deuxième rapport de la pression en amont de la vanne d'alimentation et de la pression atmosphérique.

Dans un mode de réalisation avantageux, le système comprend une vanne de recirculation disposée sur la conduite de recirculation, et lesdits moyens de mise à jour de ladite première cartographie commandent une fermeture de ladite vanne de recirculation durant une mise à jour de ladite première cartographie.

Dans un mode de réalisation préféré, ladite première cartographie comprend un ensemble de couples de premier et deuxième rapports prédéterminés. De plus, lesdits moyens de mise à jour de ladite première cartographie commandent, lors d'une mise à jour de ladite première cartographie, un recalage sur le couple prédéterminé de premier et deuxième rapports le plus proche des valeurs d'un couple de premier et deuxième rapports calculés à partir de mesures de la vitesse de rotation du turbocompresseur, de la température de l'air frais admis en amont du compresseur, de la pression en amont de la vanne d'alimentation, et de la pression atmosphérique.

Avantageusement, lesdits moyens de mise à jour de ladite première cartographie sont adaptés pour effectuer ledit recalage par gestion de la pression en amont de la vanne d'admission en commandant l'ouverture de ladite vanne d'admission.

En outre, le système comprend une deuxième cartographie prédéterminée d'une grandeur représentative de l'aptitude du moteur à aspirer du gaz en fonction de deuxièmes paramètres de fonctionnement du moteur.

Par exemple, le système comprend un capteur de mesure de la pression d'admission des gaz d'alimentation du moteur, ainsi qu'un capteur de mesure de la vitesse de rotation du moteur, et lesdits deuxièmes paramètres de fonctionnement du moteur comprennent la vitesse de rotation du moteur, et le rapport de la pression d'admission des gaz d'alimentation du moteur et du produit de la température en amont du compresseur et de la constante des gaz parfaits.

Dans un mode de réalisation préféré, lors d'une mise à jour de ladite première cartographie, lesdits moyens de mise à jour de ladite première cartographie sont adaptés pour utiliser la relation suivante :

$$Q_{air,appris} = \frac{\eta_{v,no\min al} \cdot V_{cyl}}{0{,}004} \cdot \frac{120\ N}{1\,000\,000}$$

dans laquelle :

$Q_{air,appris}$ représente une nouvelle valeur de la première cartographie, en kg/h.
$\eta_{v,no\ minal}$ représente une valeur de la grandeur représentative de l'aptitude du moteur à aspirer du gaz de ladite deuxième cartographie ; et
$V_{cyl}$ représente le volume d'un cylindre du moteur, en 1.
N : régime de rotation du moteur en tours par minute.

Selon un autre aspect de l'invention, il est également proposé un procédé d'estimation du débit d'alimentation en air frais d'un moteur de véhicule automobile équipé d'un turbocompresseur de suralimentation comprenant un compresseur d'admission et une turbine d'échappement. On met à jour, en fonction de premiers paramètres de fonctionnement du moteur comprenant une fonction de la vitesse de rotation du turbocompresseur, une première cartographie du débit d'alimentation en air frais du moteur.

D'autres buts, caractéristiques et avantages de l'invention apparaîtront à la lecture de la description suivante, de quelques exemples nullement limitatifs, et faite en référence aux dessins annexés sur lesquels :

- la figure 1 est un schéma synoptique d'un mode de réalisation d'un système selon un aspect de l'invention ;
- la figure 2 illustre le fonctionnement d'un dispositif selon un aspect de l'invention ;
- la figure 3 illustre une cartographie prédéterminée initiale du compresseur ; et
- les figures 4, 5 et 6 illustrent la mise à jour de la cartographie du compresseur selon un aspect de l'invention.

Sur la figure 1, se trouve représenté un moteur à combustion interne 1 à quatre cylindres, chaque cylindre étant référencé 2. L'air frais pénétrant dans le répartiteur d'admission 3 du moteur 1 traverse au préalable un turbocompresseur 4 comprenant un compresseur 5 et une turbine 6 montés sur un arbre commun 7. Les débits fournis par le compresseur 5 et la turbine 6 sont commandés par une unité de commande électronique 8.

L'air frais, prélevé à l'extérieur, traverse tout d'abord un filtre à air 9, avant de pénétrer dans le compresseur 5 par un conduit 10 muni d'un capteur 11 de mesure de la température de l'air admis en amont du compresseur 5. Le turbocompresseur 4 est muni d'un capteur 12 de mesure de la vitesse de rotation du turbocompresseur 4. Les capteurs 11 et 12 sont respectivement connectés à l'unité de commande électronique 8 par des connexions 11a et 12a.

Le moteur 1 comprend un capteur 13 pour mesurer la pression $P_{adm}$ d'admission des gaz en entrée du répartiteur d'admission 3. L'air comprimé issu du compresseur 5 traverse un échangeur de chaleur 14 qui permet de refroidir les gaz admis.

En sortie de l'échangeur 14, l'air comprimé refroidi traverse une vanne d'alimentation commandée 15 servant à réguler le débit d'alimentation en air du moteur 1. La vanne d'alimentation commandée 15 comprend un volet d'alimentation 15a, permettant de faire varier le débit d'alimentation en air frais du moteur 1. L'air comprimé circule du compresseur 5 au répartiteur d'admission 3 par une conduite d'alimentation 16 qui traverse l'échangeur de chaleur 14 et comprend la vanne d'alimentation commandée 15.

Les gaz issus du collecteur d'échappement 17, après combustion dans le moteur 1, par une conduite 19 sont dirigés en partie vers la conduite d'alimentation 16 par une conduite de recirculation 19, afin d'être en partie recyclés après mélange dans l'air d'admission de la conduite d'alimentation 16 dirigé vers le répartiteur d'admission 3.

Cette partie recirculée des gaz de sortie du moteur 1 est refroidie par traversée d'un échangeur de chaleur 20, puis traverse une vanne de recirculation commandée 21 servant à réguler du débit de recyclage des gaz de sortie du moteur 1. La vanne commandée 21 comprend un volet d'admission 21a, permettant de faire varier le débit.

L'autre partie des gaz de sortie du moteur 1, traverse un conduit 22, jusqu'à la turbine 6 afin d'entraîner le compresseur 5. A la sortie de la turbine 6, les gaz circulent dans la ligne d'échappement 23.

L'unité de commande électronique 8 comprend, de façon classique, un microprocesseur ou unité centrale, des mémoires vives, des mémoires mortes, des convertisseurs analogiques/numériques et différentes interfaces d'entrée et de sortie.

L'unité de commande électronique 8 reçoit différents signaux permettant le fonctionnement du système. L'unité de commande électronique 8 reçoit en particulier par la connexion par la connexion 24 un signal du capteur de pression 13 indiquant la valeur de la pression $P_{adm}$ d'admission des gaz.

L'unité de commande électronique 8 émet différents signaux permettant la gestion du fonctionnement du moteur 1 ainsi que d'autres organes du véhicule, non représentés sur la figure 1.

L'unité de commande électronique 8 émet en particulier par la connexion 28, un signal de commande de pilotage de la vanne d'alimentation 15, et émet par la connexion 26, un signal de commande de pilotage de la vanne de recirculation 21.

L'unité de commande électronique 8 régule la pression de suralimentation en agissant sur l'orientation d'ailettes internes du compresseur 5 et/ou de la turbine 6 au moyen des connexions 27 et 28.

Le système comprend également un capteur 29 de mesure de la pression $P_{ava}$ en amont de la vanne d'alimentation 15, relié à l'unité de commande électronique 8 par une connexion 30.

Un capteur 31 de mesure de la pression atmosphérique $P_{atm}$ est relié à l'unité de commande électronique 8 par une connexion 32.

L'unité de commande électronique 8 reçoit en outre, par une connexion 33, un signal indiquant la valeur de la vitesse de rotation $N_{moteur}$ du moteur 1 provenant d'un capteur 34 de mesure de la vitesse de rotation du moteur 1.

L'unité de commande électronique 8 comprend également un module de mise à jour 35 d'une première cartographie 36 du débit d'alimentation en air frais $Q_{air_frais}$ du moteur 1, et une deuxième cartographie prédéterminée 37 d'une grandeur $\eta_v$ représentative de l'aptitude du moteur 1 à aspirer du gaz.

L'estimation du débit d'alimentation en air frais $Q_{air_frais}$ est effectuée à partir de la première cartographie 36. Afin d'effectuer une estimation précise, on effectue une mise à jour de la première cartographie, car initialement, celle-ci a été déterminée pour un turbocompresseur de référence ou théorique, différent du turbocompresseur courant. En d'autres termes on introduit une phase d'apprentissage des caractéristiques du compresseur utilisé, afin d'adapter la première cartographie 36 au turbocompresseur utilisé. Ceci permet d'améliorer l'estimation du débit d'alimentation en air frais.

Cette phase d'apprentissage ou mise à jour de la première cartographie 36, peut être effectuée à maintes reprises, au cours du temps, afin de tenir compte du vieillissement du turbocompresseur 4, et de son évolution de fonctionnement.

Cette mise à jour de la première cartographie 36 peut être réalisée à périodes régulières tout en veillant à ne pas dégrader le fonctionnement du véhicule. Il est également possible d'effectuer cette mise à jour en fin de montage du véhicule, puis de visites de contrôle du véhicule, ce qui permet de faire fonctionner le moteur 1 uniquement pour mettre à jour la première cartographie 36.

La figure 2 illustre le fonctionnement de la mise à jour ou apprentissage de la première cartographie 36.

Lors d'une mise à jour de la première cartographie 36, le module de mise à jour 35 commande la fermeture de la vanne de recirculation 21 ou vanne EGR. Puis un ensemble de mesures 38 est pris en compte, comprenant les valeurs de la pression atmosphérique $P_{atm}$, de la pression $P_{ava}$ en amont de la vanne d'alimentation 15, de la vitesse de rotation $N_{turbo}$ du turbocompresseur 4, de la température $T_{ac}$ en amont du compresseur 5, et de a vitesse de rotation $N_{moteur}$ du moteur 1. Il est également effectué une régulation ou recalage en pression $P_{ava}$ en amont de la vanne d'alimentation 15. Ce recalage permet de se situer sur un couple de valeurs d'entrées de la première cartographie mémorisée, le plus proche de celui correspondant au premier rapport de la vitesse de rotation $N_{turbo}$ du turbocompresseur 4 et de la racine carrée de la température $T_{ac}$ en amont du compresseur 4 mesurées, et du deuxième rapport de la pression $P_{ava}$ en amont de la vanne d'alimentation et de la pression atmosphérique Patm mesurées.

La deuxième cartographie, qui est une cartographie prédéterminée d'une grandeur $\eta_v$ caractéristique de l'aptitude du moteur 1 à aspirer du gaz, en fonction de la vitesse de rotation $N_{moteur}$ du moteur 1, et le rapport $P_{adm}/R \cdot T_{ac}$ de la pression d'admission $P_{adm}$ des gaz d'alimentation du moteur 1 et du produit de la température $T_{ac}$ en amont du compresseur 5 et de la constante des gaz parfaits R. Cette deuxième cartographie nominale 37 permet de calculer pour le couple d'entrée ou point recalé le plus proche de celui correspondant aux valeurs de mesures 38, la valeur apprise ou mise à jour, dans la première cartographie 36, du débit d'alimentation en air frais $Q_{air_frais}$ fourni par le turbocompresseur 4 au moteur 1.

Cette valeur mise a à jour du débit d'air $Q_{air_frais}$ d'alimentation du moteur 1, fournie par le turbocompresseur 4 est calculée au moyen de la relation :

$$Q_{air_frais} = \frac{\eta_v \times V_{cyl}}{0{,}004} \, x \, \frac{120 \;\; N}{1\,000\,000}$$

dans laquelle $V_{cyl}$ représente le volume d'un cylindre, en 1.

A l'appui des figures 3 à 6, une mise à jour ou apprentissage de la première cartographie est décrite.

La figure 3 représente une première cartographie 36 avec des valeurs de référence pour ses deux entrées et sa sortie, le débit d'alimentation en air frais du moteur 1. Cette cartographie est mémorisée sous forme d'un tableau à deux entrées, illustré sur la figure 4. Les valeurs représentées par a, b, c, d, e, f, g, h, i sont ici les valeurs pour un compresseur de référence ou théorique.

Lors du premier apprentissage ou mise à jour, ainsi que pour les suivantes, la vanne de recirculation 21 doit être fermée, et un recalage en pression $P_{ava}$ en amont de la vanne d'alimentation 15. Dans ce cas, la position du volet d'alimentation 15a de la vanne d'alimentation 15 est mis en position pour faire coïncider la vitesse de rotation $N_{turbo}$ du turbocompresseur et la pression $P_{ava}$ en amont de la vanne d'admission 15, avec un couple de coordonnées d'entrée du tableau mémorisé, par exemple celui représenté en gras sur la figure 5, avec $\frac{P_{ava}}{P_{atm}} = 10$

L'invention permet donc de mettre à jour ou effectuer un apprentissage de la cartographie du débit d'air fourni par le compresseur, et ainsi tenir compte de ses différences avec le turbocompresseur théorique ou de référence.

L'invention permet en outre de mettre à jour la cartographie du débit d'air fourni par le compresseur au cours du temps et ainsi tenir compte de l'évolution de son fonctionnement avec le temps.

## Revendications

1. Système d'estimation du débit d'alimentation en air frais d'un moteur (1) de véhicule automobile équipé d'un turbocompresseur (4) de suralimentation comprenant un compresseur (5) d'admission et une turbine (6) d'échappement, et équipé d'une unité de commande électronique (8),
un capteur (12) de vitesse de rotation du turbocompresseur (4),
une première cartographie mémorisée (36) du débit d'alimentation en air frais du moteur (1) en fonction de premiers paramètres de fonctionnement du moteur (1), lesdits premiers paramètres de fonctionnement du moteur (1) comprenant une fonction de la vitesse de rotation du turbocompresseur (4), **caracterisé en ce qu**'il comprend:

    des moyens de mise à jour (35) de ladite première cartographie (36) du débit d'alimentation en air frais du moteur (1).

2. Système selon la revendication 1, comprenant un capteur (11) de mesure de la température de l'air frais admis en amont du compresseur (5), une vanne d'alimentation (15) disposée sur la conduite d'alimentation (16) en air frais du moteur (1) et située en aval du compresseur (5) et en amont d'une conduite de recirculation (19) des gaz d'échappement du moteur (1), un capteur (29) de mesure de la pression en amont de ladite vanne d'alimentation (15), et un capteur (31) de mesure de la pression atmosphérique,
dans lequel lesdits premiers paramètres de fonctionnement du moteur (1) comprennent un premier rapport de la vitesse de rotation du turbocompresseur (4) et de la racine carrée de la température en amont du compresseur (5), et un deuxième rapport de la pression en amont de la vanne d'alimentation (15) et de la pression atmosphérique.

3. Système selon la revendication 2, comprenant une vanne de recirculation (21) disposée sur la conduite de recirculation (19), dans lequel lesdits moyens de mise à jour (35) de ladite première cartographie (36) commandent une fermeture de ladite vanne de recirculation (21) durant une mise à jour de ladite première cartographie (36).

4. Système selon la revendication 2 ou 3, dans lequel, ladite première cartographie (36) comprenant un ensemble de couples de premier et deuxième rapports prédéterminés, lesdits moyens de mise à jour (35) de ladite première cartographie (36) commandent, lors d'une mise à jour de ladite première cartographie (36), un recalage sur le couple prédéterminé de premier et deuxième rapports le plus proche des valeurs d'un couple de premier et deuxième rapports calculés à partir de mesures de la vitesse de rotation du turbocompresseur (4), de la température de l'air frais admis en amont du compresseur (5), de la pression en amont de la vanne d'alimentation (15), et de la pression atmosphérique.

**5.** Système selon l'une quelconque des revendications 2 à 4, dans lequel lesdits moyens de mise à jour (35) de ladite première cartographie (36) sont adaptés pour effectuer ledit recalage par gestion de la pression en amont de la vanne d'admission (15) en commandant l'ouverture de ladite vanne d'admission (15).

**6.** Système selon l'une quelconque des revendications 1 à 5, comprenant une deuxième cartographie (37) prédéterminée d'une grandeur représentative de l'aptitude du moteur (1) à aspirer du gaz en fonction de deuxièmes paramètres de fonctionnement du moteur (1).

**7.** Système selon la revendication 6, comprenant un capteur (13) de mesure de la pression d'admission des gaz d'alimentation du moteur (1), et un capteur (34) de mesure de la vitesse de rotation du moteur (1), dans lequel lesdits deuxièmes paramètres de fonctionnement du moteur (1) comprennent la vitesse de rotation du moteur (1), et le rapport de la pression d'admission des gaz d'alimentation du moteur (1) et du produit de la température en amont du compresseur (5) et de la constante des gaz parfaits.

**8.** Système selon la revendication 6 ou 7, dans lequel, lors d'une mise à jour de ladite première cartographie (36), lesdits moyens de mise à jour de ladite première cartographie sont adaptés pour utiliser la relation suivante :

$$Q_{air,appris} = \frac{\eta_{v,no\ \min al} \cdot V_{cyl}}{0,004} x \frac{120\ \ N}{1\,000\,000}$$

dans laquelle :

$Q_{air,appris}$ représente une nouvelle valeur du débit d'air d'alimentation du moteur (1) fourni par le compresseur (5), de la première cartographie (36), en kg/h ;
$\eta_{v,no\ minal}$ représente une valeur de la grandeur représentative de l'aptitude du moteur (1) à aspirer du gaz, de ladite deuxième cartographie (37), en kg/h ; et
$V_{cyl}$ représente le volume d'un cylindre du moteur (1), en 1.
N : vitesse de rotation du moteur en tour par minute.

**9.** Procédé d'estimation du débit d'alimentation en air frais d'un moteur (1) de véhicule automobile équipé d'un turbocompresseur de suralimentation (4) comprenant un compresseur (5) d'admission et une turbine (6) d'échappement, **caractérisé en ce qu**'on met à jour, en fonction de premiers paramètres de fonctionnement du moteur (1) comprenant une fonction de la vitesse de rotation du turbocompresseur (4), une première cartographie (36) du débit d'alimentation en air frais du moteur (1).

## Claims

**1.** System for estimating the fresh air feed flowrate of a motor vehicle engine (1) equipped with a supercharge turbocompressor (4) comprising an intake compressor (5) and an exhaust turbine (6), and equipped with an electronic control unit (8),
a sensor (12) of rotation speed of the turbocompressor (4),
a first stored mapping (36) of the fresh air feed flowrate of the engine (1) as a function of first operating parameters of the engine (1), the said first operating parameters of the engine (1) comprising a function of the rotation speed of the turbocompressor (4), **characterized in that** it comprises:

means (35) for updating the said first mapping (36) of the fresh air feed flowrate of the engine (1).

**2.** System according to Claim 1, comprising a sensor (11) for measuring the temperature of the fresh air admitted upstream of the compressor (5), a feed valve (15) arranged on the fresh air feed pipe (16) of the engine (1) and situated downstream of the compressor (5) and upstream of an exhaust gas recirculation pipe (19) of the engine (1), a sensor (29) for measuring the pressure upstream of the said feed valve (15), and a sensor (31) for measuring the atmospheric pressure,
in which the said first operating parameters of the engine (1) comprise a first ratio of the rotation speed of the turbocompressor (4) and of the square root of the temperature upstream of the compressor (5), and a second ratio of the pressure upstream of the feed valve (15) and of the atmospheric pressure.

**3.** System according to Claim 2, comprising a recirculation valve (21) arranged on the recirculation pipe (19), in which the said means (35) for updating the said first mapping (36) control the opening of the said recirculation valve (21) during an update of the said first mapping (36).

**4.** System according to Claim 2 or 3, in which, the said first mapping (36) comprising a set of pairs of first and second predetermined ratios, the said means (35) for updating the said first mapping (36) control, during an update of the said first mapping (36), a retune to the predetermined pair of first and second ratios that is closest to the values of a pair of first and second ratios calculated on the basis of measurements of the rotation speed of the turbocompressor (4), of the temperature of the fresh air admitted upstream of the compressor (5), of the pressure upstream of the feed valve (15), and of the atmospheric pressure.

**5.** System according to any one of Claims 2 to 4, in which the said means (35) for updating the said first mapping (36) are adapted for performing the said retune by managing the pressure upstream of the intake valve (15) by controlling the opening of the said intake valve (15).

**6.** System according to any one of Claims 1 to 5, comprising a second predetermined mapping (37) of a quantity representative of the ability of the engine (1) to suck in gas as a function of second operating parameters of the engine (1).

**7.** System according to Claim 6, comprising a sensor (13) for measuring the intake pressure of the feed gases of the engine (1), and a sensor (34) for measuring the rotation speed of the engine (1), in which the said second operating parameters of the engine (1) comprise the rotation speed of the engine (1), and the ratio of the intake pressure of the feed gases of the engine (1) and of the product of the temperature upstream of the compressor (5) and of the ideal gas constant.

**8.** System according to Claim 6 or 7, in which, during an update of the said first mapping (36), the said means for updating the said first mapping are adapted for using the following relation:

$$Q_{air,trained} = \frac{\eta_{v,nominal} \cdot V_{cyl}}{0.004} x \frac{120\ N}{1\,000\,000}$$

in which:

$Q_{air,trained}$ represents a new value of the feed air flowrate of the engine (1) supplied by the compressor (5), of the first mapping (36), in kg/h;
$\eta_{v,nominal}$ represents a value of the quantity representative of the ability of the engine (1) to suck in gas, of the said second mapping (37), in kg/h; and
$V_{cyl}$ represents the volume of a cylinder of the engine (1), in 1.
N: rotation speed of the engine in revolutions per minute.

**9.** Method for estimating the fresh air feed flowrate of a motor vehicle engine (1) equipped with a supercharge turbocompressor (4) comprising an intake compressor (5) and an exhaust turbine (6), **characterized in that** a first mapping (36) of the fresh air feed flowrate of the engine (1) is updated as a function of first operating parameters of the engine (1) comprising a function of the rotation speed of the turbocompressor (4).

## Patentansprüche

**1.** System zum Schätzen des Frischluftzufuhr-Durchflusses eines Kraftfahrzeugmotors (1), der mit einem Aufladungs-Turbokompressor (4), der einen Einlasskompressor (5) und eine Auslassturbine (6) enthält, und mit einer elektronischen Steuereinheit (8) ausgerüstet ist, mit
einem Drehzahlsensor (12) für den Turbokompressor (4),
einem ersten gespeicherten Kennfeld (36) für den Frischluftzufuhr-Durchfluss des Motors (1) in Abhängigkeit von ersten Betriebsparametern des Motors (1), wobei die ersten Betriebsparameter des Motors (1) eine Funktion der Drehzahl des Turbokompressors (4) enthalten, **dadurch gekennzeichnet, dass** es umfasst:

Mittel (35) zum Aktualisieren des ersten Kennfeldes (36) des Frischluftzufuhr-Durchflusses des Motors (1).

**2.** System nach Anspruch 1, das einen Sensor (11) zum Messen der Temperatur der eingelassenen Frischluft am Eingang des Kompressors (5), ein Versorgungsventil (15), das an der Versorgungsleitung (16) für Frischluft des Motors (1) angeordnet ist und sich auf der Auslassseite des Kompressors (5) und auf der Einlassseite einer Rückführungsleitung (19) für die Abgase des Motors (1) befindet, einen Sensor (29) zum Messen des Drucks auf der Einlassseite des Versorgungsventils (15) sowie einen Sensor (31) zum Messen des Atmosphärendrucks enthält, wobei die ersten Betriebsparameter des Motors (1) ein erstes Verhältnis der Drehzahl des Turbokompressors (4) zu der Quadratwurzel der Temperatur auf der Einlassseite des Kompressors (5) und ein zweites Verhältnis des Drucks auf der Einlassseite des Versorgungsventils (15) zum Atmosphärendruck enthalten.

**3.** System nach Anspruch 2, das ein Rückführungsventil (21) enthält, das in der Rückführungsleitung (19) angeordnet ist, wobei die Mittel (35) zum Aktualisieren des ersten Kennfeldes (36) während der Aktualisierung des ersten Kennfeldes (36) ein Schließen des Rückführungsventils (21) befehlen.

**4.** System nach Anspruch 2 oder 3, wobei dann, wenn das erste Kennfeld (36) eine Gesamtheit von Paaren aus ersten und zweiten vorgegebenen Verhältnissen enthält, die Mittel (35) zum Aktualisieren des ersten Kennfeldes (36) bei der Aktualisierung des ersten Kennfeldes (36) eine Kalibrierung auf das vorgegebene Paar eines ersten und eines zweiten Verhältnisses, die am nächsten bei den Werten eines Paars eines ersten und eines zweiten Verhältnisses liegen, die anhand der Messungen der Drehzahl des Turbokompressors (4), der Temperatur der eingelassenen Frischluft auf der Einlassseite des Kompressors (5), des Drucks auf der Einlassseite des Versorgungsventils (15) und des Atmosphärendrucks berechnet werden, befehlen.

**5.** System nach einem der Ansprüche 2 bis 4, wobei die Mittel (35) zum Aktualisieren des ersten Kennfeldes (36) dazu ausgelegt sind, die Kalibrierung durch Steuerung des Drucks auf der Einlassseite des Einlassventils (15) zu bewirken, indem sie die Öffnung des Einlassventils (15) befehlen.

**6.** System nach einem der Ansprüche 1 bis 5, das ein zweites vorgegebenes Kennfeld (37) für eine Größe, die das Gasansaugvermögen des Motors (1) in Abhängigkeit von zweiten Betriebsparametern des Motors (1) repräsentiert, enthält.

**7.** System nach Anspruch 6, das einen Sensor (13) zum Messen des Einlassdrucks der Zufuhrgase des Motors (1) und einen Sensor (34) zum Messen der Drehzahl des Motors (1) enthält, wobei die zweiten Betriebsparameter des Motors (1) die Drehzahl des Motors (1) und das Verhältnis des Einlassdrucks der Zufuhrgase des Motors (1) und des Produkts aus der Temperatur auf der Einlassseite des Kompressors (5) und der Gaskonstante für ideale Gase enthalten.

**8.** System nach Anspruch 6 oder 7, wobei bei der Aktualisierung des ersten Kennfeldes (36) die Mittel zum Aktualisieren des ersten Kennfeldes dazu ausgelegt sind, die folgende Beziehung zu verwenden:

$$Q_{Luft,ermittelt} = \frac{\eta_{v,nominal} \cdot V_{Zyl}}{0{,}004} \times \frac{120\,N}{1000000}$$

worin:

$Q_{Luft,\ ermittelt}$ einen neuen Wert des von dem Kompressor (5) gelieferten Zufuhrluft-Durchflusses des Motors (1) des ersten Kennfeldes (36) in kg/h repräsentiert;
$\eta_{V,nominal}$ einen Wert der Größe, die das Gasansaugvermögen des Motors (1) repräsentiert, des zweiten Kennfeldes (37) in kg/h repräsentiert;

$V_{Zyl}$ das Volumen eines Zylinders des Motors (1) in 1 repräsentiert; und
N die Drehzahl des Motors in Umdrehungen pro Minute ist.

**9.** Verfahren zum Schätzen des Frischluftzufuhr-Durchflusses eines Kraftfahrzeugmotors (1), der mit einem Aufladungs-Turbokompressor (4) ausgerüstet ist, der einen Einlasskompressor (5) und eine Auslassturbine (6) enthält, **dadurch gekennzeichnet, dass** ein erstes Kennfeld (36) für den Frischluftzufuhr-Durchfluss des Motors (1) als Funktion erster Betriebsparameter des Motors (1), die eine Funktion der Drehzahl des Turbokompressors (4) enthalten, aktualisiert wird.

FIG.1

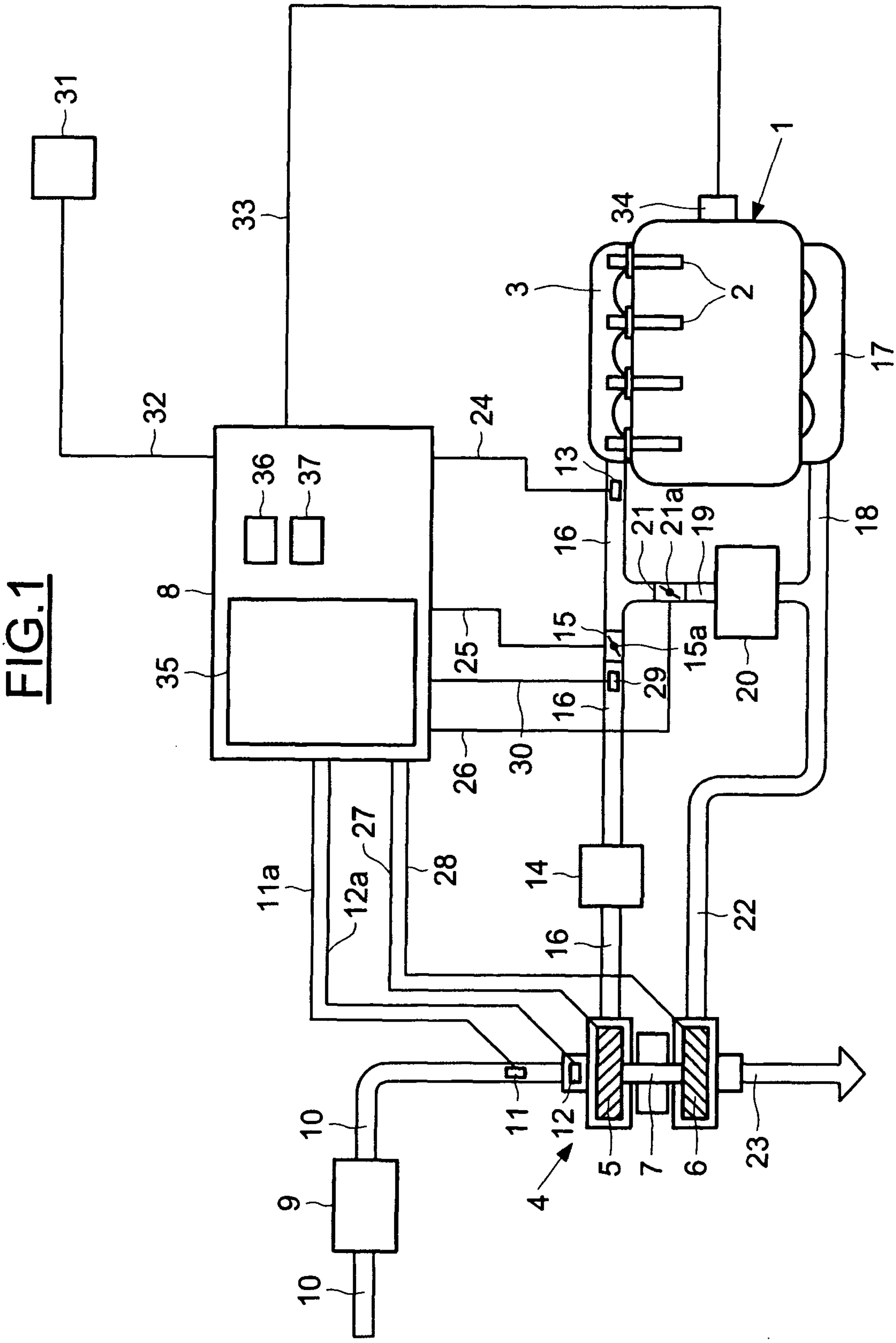
1
2
3
4
5
6
7
8
9
10
11
11a
12
12a
13
14
15
15a
16
17
18
19
20
21
21a
22
23
24
25
26
27
28
29
30
31
32
33
34
35
36
37

FIG.2

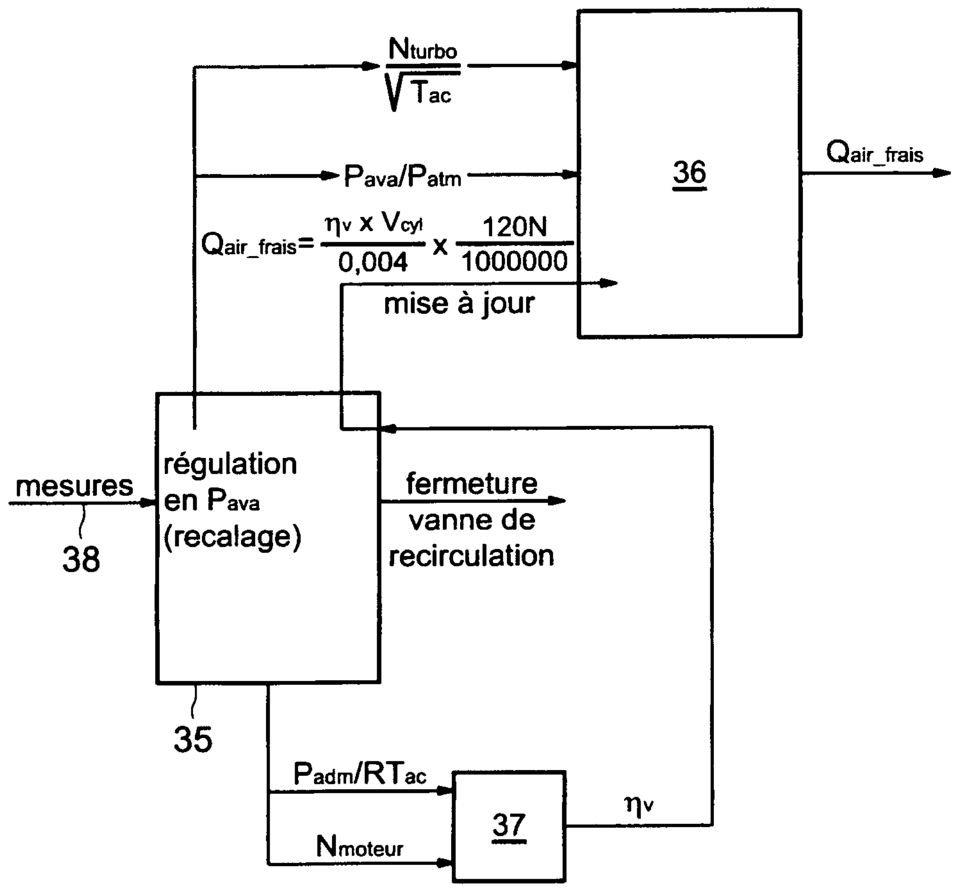

Nturbo / √Tac
Pava/Patm
36
Qair_frais
Qair_frais= ηv x Vcyl / 0,004 x 120N / 1000000
mise à jour
mesures
38
régulation
en Pava
(recalage)
fermeture
vanne de
recirculation
35
Padm/RTac
Nmoteur
37
ηv

# FIG.3

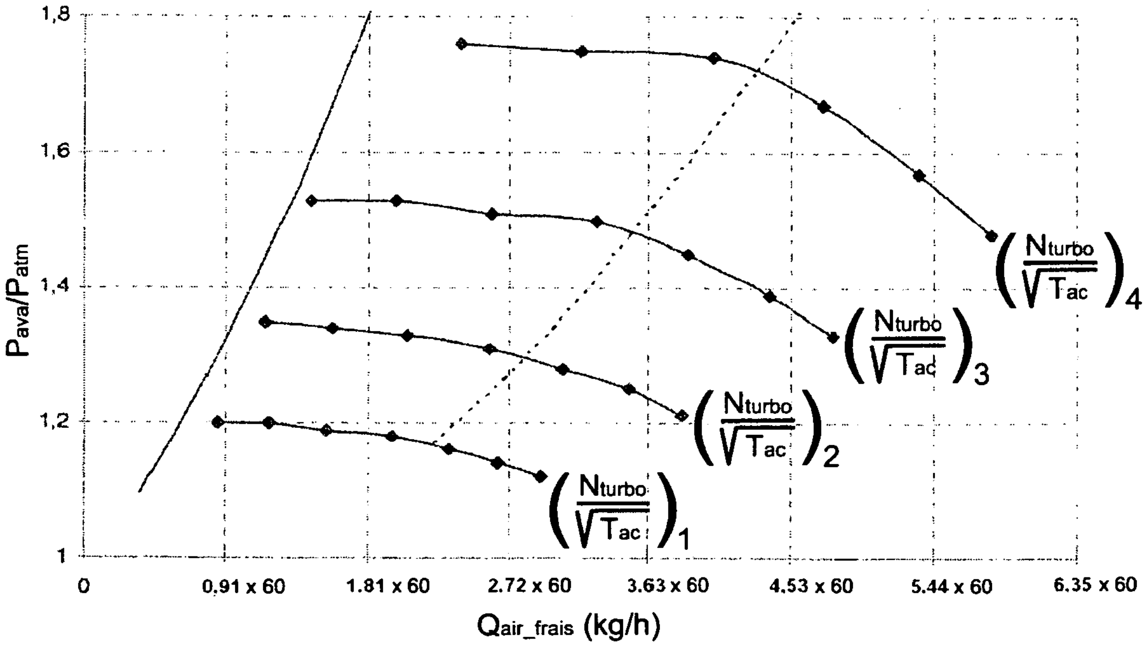


# FIG.4

| | | $N_{turbo}/\sqrt{T_{avc}}$ | | |
|---|---|---|---|---|
| | | 2 | 20 | 200 |
| $P_{ava}/P_{atm}$ | 1 | a | b | c |
| | 10 | d | e | f |
| | 100 | g | h | i |

# FIG.5

| | | $N_{turbo}/\sqrt{T_{avc}}$ | | |
|---|---|---|---|---|
| | | 2 | **20** | 200 |
| $P_{ava}/P_{atm}$ | 1 | a | b | c |
| | **10** | d | e | f |
| | 100 | g | h | i |

# FIG.6

| | | $N_{turbo}/\sqrt{T_{avc}}$ | | |
|---|---|---|---|---|
| | | 2 | **20** | 200 |
| $P_{ava}/P_{atm}$ | 1 | a | b | c |
| | **10** | d | e' | f |
| | 100 | g | h | i |

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 0129386 A, Robert BOSCH
- FR 2281889, Volkswagen
- DE 10124595